**Europäisches Patentamt**

**European Patent Office**

**Office européen des brevets**

(19)

(11) Publication number: **0 063 047**
**A2**

## (12) EUROPEAN PATENT APPLICATION

(21) Application number: **82301893.2**

(22) Date of filing: **08.04.82**

(51) Int. Cl.³: **G 09 B 17/00**

(30) Priority: **13.04.81 GB 8111483**

(43) Date of publication of application:
**20.10.82 Bulletin 82/42**

(84) Designated Contracting States:
**AT BE CH DE FR IT LI LU NL SE**

(71) Applicant: **THE OPEN UNIVERSITY**
**P.O. Box 252 Walton Hall Walton**
**Milton Keynes MK7 6BP Buckinghamshire(GB)**

(72) Inventor: **Whalley, Peter Carlton**
**3 Lissel Road Simpson**
**Milton Keynes Buckinghamshire(GB)**

(74) Representative: **Thomson, Roger Bruce et al,**
**POLLAK MERCER & TENCH High Holborn House 52-54**
**High Holborn**
**London WC1V 6RY(GB)**

(54) Apparatus for and methods of monitoring reading stategies.

(57) A reading protocol recorder which enables a record to be obtained of the strategies adopted by the reader of pages of text monitors the sequence in which text elements are read. An irradiating source (13) is directed towards a target zone into which coded areas (12) of pages (10, 11) are moved as the pages are turned. Sensors (15) view the target zone and a digital and/or analog display and/or record (18, 19) is obtained. The time intervals between turning of the pages are preferably also monitored.

EP 0 063 047 A2

Croydon Printing Company Ltd.

- 1 -

APPARATUS FOR AND METHODS OF MONITORING
READING STRATEGIES

SPECIFICATION

This invention relates generally to apparatus for and methods of monitoring reading strategies. It is particularly concerned with what is hereinafter referred to as a reading protocol recorder, which enables a record to be obtained of the strategies adopted by the reader of pages of text.

An understanding of the reading process is particularly important in deciding how best to present educational and technical texts for example, so that the presentation of the information can be in a form which is most easily assimilated by the reader. For example, when one is considering how to present a complex training manual or an educational course, it is desirable to know how best to order and present the information in order to aid the reader, as opposed to creating a perhaps unrecognised barrier or hurdle. In order fully to evaluate how a reader deals with a given text structure it is necessary to have some process measure of the reading strategies adopted in relation to that text structure.

Various methods have been used in the past for analysing reading techniques. For example, the measurement of eye movements has been the subject of much research, but it is now appreciated that the visual activity involved in reading is only the most accessible behaviour in a complex process. The control of eye movements is only one sub-skill among the many involved in reading. A simple analysis of eye movement record is inadequate.

Other evaluation techniques involve the production of time records indicating how long a reader spends on given sections or pages of a text. However, simple measurement of time periods does not enable one fully to evaluate how the reader actually uses the individual units of the complete text or how the reader acquires information from the text.

It is an object of the present invention to provide apparatus for and methods of monitoring reading techniques, for example with a reading protocol recorder, by means of which one can obtain a record not only of time spent by a reader on individual elements of the complete text but also of the sequence in which the reader reads the text. The primary object of the present invention is this creation of a record of the sequence in which text elements are read, as opposed to a purely temporal analysis of the reader's activities.

For example, if one has a handbook or training manual and appendix, it is extremely valuable to be able to analyse how often a reader refers to the appendix in reading through the main body of the text, coupled in a preferred system with an indication of how long the reader spends over these individual reading process steps. On the basis of the information obtained in this way one can then make valid decisions as to how the information is presented in the text, in what order, in what way, and with what amount of repetition, in order to aid the reader to the maximum extent.

In accordance with the present invention there is provided reading protocol recording apparatus comprising an irradiating source arranged to be directed to a target zone into which individually coded areas of pages are moved as the pages of a multiple-page text are turned over, sensor means arranged to view the target zone, evaluation means responsive to changes in the coded areas in the target zone, and recording means arranged to provide a record of the sequence in which the pages are turned over.

Preferably, the irradiating source is a pulsed source. It may comprise a plurality of light-emitting diodes, preferably operating in a non-visible frequency range.

The apparatus may be adapted to monitor both sides of each page. The coded areas on the individual pages may be at any position on the page, although preferably adjacent to an edge.

A Grey code system is preferably used both for sensing and recording, although an analog output can alternatively or additionally be provided.

Also in accordance with the invention there is provided a method of monitoring the sequence in which the individual pages of a multiple-page text are read, which comprises irradiating a target zone into which individually coded areas of the pages are moved as they are turned over, sensing changes in the coded areas in the target zone, and providing therefrom a record of the sequence in which the pages are turned over.

Preferably, the method includes additionally recording the time intervals between the turning of the pages.

In order that the invention may be fully understood  a presently preferred embodiment of reading protocol recorder in accordance with the invention will now be described by way of example and with reference to the drawing, which is a block schematic representation of the recorder.

In the drawing two pages of a book, manual or other multiple-page text are indicated at 10 and 11.   The top margin of each page is provided with markings 12, preferably in Grey code format, as a code identification of each individual page.   Any number of markings 12 may be provided, so long as the number is sufficient to distinguish every page in which one is interested.   It would of course be possible to omit the markings from any page which one did not wish to monitor.   These coded markings 12 are irradiated by a source 13.   Although this is shown as a single source, in practice one could use a linear array of light-emitting diodes arranged parallel with the edge of the page.   In order to minimise problems due to changes in the ambient light, or due to sunlight, radiation in the infra-red portion of the spectrum is preferably used.   The radiation source 13 is powered by a pulse generator 14.   The use of a pulsed system both saves power and also helps  to avoid problems due to changes in ambient light.   A plurality of sensors 15 are arrayed to view the target zone in which the markings 12 lie.   These sensors 15 may comprise a plurality of infra-red responsive photodiodes.   A collimating tube 15a is preferably associated with the sensors 15 to give improved performance.   An optical lens system may also be incorporated in the sensing system.

The binary output from the sensors 15 is fed to a level detector 16 which is also controlled from the pulse generator 14. The level detector 16 is connected to a binary-to-denary converter 17 which feeds both a display device 18 and a recording device 19. The recording device 19 may comprise a cassette recorder, a floppy disc, or an electronic memory device for example. The broken line indicated at 21 between the input to the converter 17 and the input to the recorder 19 is included because, in the preferred embodiment, the recording is actually made in a binary format and the electronic circuitry of the recorder effectively converts the denary signals back to binary. Alternatively, the recording may be in the form of a graphical presentation plotted against real time; this enables one to achieve a recording of the time intervals between the turning of the pages. The display device 18 may provide either a digital display or an analog display. One advantage of the latter is that changes over time are made more apparent.

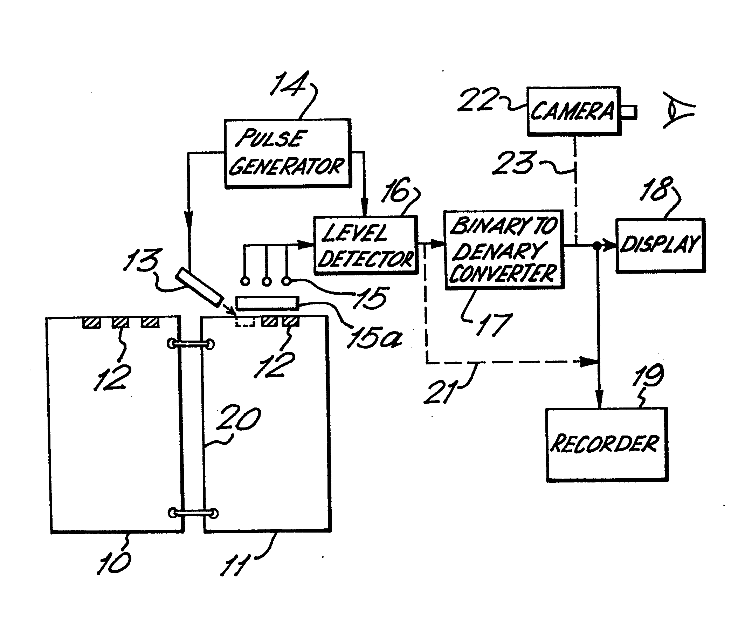

The markings 12 on the individual pages can be provided on one or both sides of each page. If, with the type of open-book arrangement shown in Fig. 1, one wishes to monitor both pages 10 and 11, then elements 13, 15, 15a and 16 would need to be duplicated for the lefthand page. Moreover, the markings can be provided at any position on the page, although preferably adjacent to one edge. This edge could be the edge 20 running down the centre of the book if a suitable sensing system is used, for example a remote television camera.

Although in the illustrated system the recorder uses visible markings 12, there is no reason why invisible coded markings should not be used, with appropriate sensing means, for example using ultra-violet light.

One of the advantages of the recorder is that it can be made portable. However, if this is not important, one could use a remote television camera to sense markings on the pages and decode from that.    One could then possibly use just the ambient light incident on the page without the need for a specific source of radiation to illuminate the markings.

In another alternative embodiment, one could link the reading protocol recorder to an eye-movement camera 22 by a connection indicated schematically by the broken line 23 to provide additional detailed information.

Additionally, it may be useful simultaneously to monitor and record the reader's interaction with a keyboard device, such as a computer terminal or some output parameter of the equipment with which the reader might be working.

As will be appreciated from the foregoing description the essential feature of the present invention is that one is recording and/or displaying the sequence in which the pages are turned and read, rather than just monitoring the time spent in reading each portion of the text.

CLAIMS :

1. A method of monitoring the sequence in which the individual pages of a multiple-page text are read, which comprises monitoring a target zone into which individually coded areas of the pages are moved as they are turned over, sensing changes in the coded areas in the target zone, and providing therefrom a record of the sequence in which the pages are turned over.

2. A method as claimed in claim 1, which also includes recording the time intervals between the turning of the pages.

3. Reading protocol recording apparatus comprising sensor means arranged to view a target zone into which individually coded areas of pages are moved as the pages of a multiple-page text are turned over, evaluation means responsive to changes in the coded areas in the target zone, and recording means arranged to provide a record of the sequence in which the pages are turned over.

4. Reading protocol recording apparatus comprising an irradiating source arranged to be directed towards a target zone into which individually coded areas of pages are moved as the pages of a multiple-page text are turned over, sensor means arranged to view the target zone, evaluation means responsive to changes in the coded areas in the target zone, and recording means arranged to provide a record of the sequence in which the pages are turned over.

5. Apparatus as claimed in claim 4, in which the irradiating source is a pulsed source.

6. Apparatus as claimed in claim 4 or 5, in which the irradiating source comprises a plurality of light-emitting diodes.

7. Apparatus as claimed in claim 6, in which the diodes are infra-red emitting diodes.

8. Apparatus as claimed in any of claims 3 to 7, adapted to monitor both sides of each page.

9. Apparatus as claimed in any of claims 3 to 8, in which the sensor means includes collimating means.

10. Apparatus as claimed in any of claims 3 to 9, in which a Grey code system is used for both sensing and recording.

11. Apparatus as claimed in any of claims 3 to 10, which also includes detector means arranged to monitor eye movements.

12. Apparatus as claimed in any of claims 3 to 11, which includes display means arranged to provide an analog output display of the turns of the pages plotted against time.